# EUROPEAN PATENT APPLICATION

(11) **EP 3 503 562 A1**
(43) Date of publication of application: **26.06.2019**
(21) Application number: 17210192.5
(22) Date of filing: 22.12.2017
(51) Int. Cl.: H04N 21/235, H04N 21/81, H04N 19/467, H04N 1/32

(54) **METHOD, SYSTEM AND COMPUTER PROGRAM FOR ENCODING VISIBLE LIGHT COMMUNICATION INFORMATION IN AN IMAGE FRAME**

(71) Applicant: Vestel Elektronik Sanayi ve Ticaret A.S., 45030 Manisa (TR)
(72) Inventor: ÍKIZLER, Anil, 45030 Manisa (TR)
(74) Representative: Flint, Adam

(57) **Abstract**

A method of encoding visible light communication information in an image frame (100) includes processing the image frame (100) to identify one or more high frequency components (106, 108) of the image frame (100). Subsequently, the image frame (100) is encoded in the region of at least one of the high frequency components (106, 108) with information for visible light communication.

## Description

### Technical Field

The present disclosure relates to a method, system and computer program for encoding visible light communication information in an image frame.

### Background

Visible light communication is a data communication technique which uses visible light (ranging from around 390nm to 700nm) to convey data. Visible light communication is possible over a multitude of electronic items that comprise a screen and that can be imaged using a camera. Examples of such electronic items include televisions, personal computers, smartphones, and smart watches, and display screens or display devices generally. In one example, a video stream can be encoded with visible light information, thereby transmitting the visible light information when the encoded video is output at the screen of an electronic device.

Known visible light communication techniques often struggle to conceal the added visible light information. In one example, data tags and barcodes such as bokodes and "QR" or matrix barcodes and the like carrying visible light information can be added to images and video streams. Visible light information encoded in such images and video streams are, however, often visible to viewers. The information can, for example, obstruct elements of the image or video stream, thereby disrupting the viewing experience of the user. In another example, visible light information in images and videos can lead to luminance and chromatic deviations, thereby leaving visibly blemished areas on the images and video streams being used for visible light communication. Arrangements for visible light communication that does not interfere with the user's view of the screen are known, but are not efficient or have increased bit error rates.

### Summary

According to a first aspect disclosed herein, there is provided a method of encoding visible light communication information in an image frame, the method comprising:
processing the image frame to identify one or more high frequency components of the image frame; and
encoding the image frame in the region of at least one of the high frequency components with information for visible light communication.

A "high frequency" component of an image may be for example an edge in an image or a textured region on an image. The term "high frequency component" may in many respects be regarded as synonymous with an edge in an image or a textured region on an image, as is well known to persons skilled in the art in the field of image processing.

In an example, identifying one or more high frequency components comprises determining whether frequency components of the image frame are above a frequency threshold.

In an example, processing the image frame comprises applying a high pass frequency filter to the image frame to identify one or more high frequency components of the image frame.

In an example, the method comprises:
generating a frame mask identifying one of more regions of high frequency components; and
encoding the image frame in the region of at least one of the high frequency components with information for visible light communication via the frame mask.

In an example, the image frame is extracted from a video stream comprising a plurality of image frames.

In an example, the image frame encoded with information for visible light communication forms part of an encoded video stream of plural image frames encoded with information for visible light communication, the encoded video stream being arranged to carry video stream information and visible light communication information.

According to a second aspect disclosed herein, there is provided a system for encoding visible light communication information in an image frame, the system comprising:
an image processor for processing the image frame to identify one or more high frequency components of the image frame; and
an encoder for encoding the image frame in the region of at least one of the high frequency components with information for visible light communication.

In an example, the image processor is arranged to identify one or more high frequency components of the image frame by determining whether frequency components of the image frame are above a frequency threshold.

In an example, the image processor is arranged to apply a high pass frequency filter to the image frame to identify one or more high frequency components of the image frame.

In an example, the image processor is arranged to:
generate a frame mask identifying one of more regions of high frequency components; and
encode the image frame in the region of at least one of the high frequency components with information for visible light communication via the frame mask.

According to a second aspect disclosed herein, there is provided a computer program for encoding visible light communication information in an image frame, the computer program comprising instructions such that when the computer program is executed on a computing device, the computing device is arranged to:
process the image frame to identify one or more high frequency components of the image frame; and
encoding the image frame in the region of at least one of the high frequency components with information for visible light communication.

### Brief Description of the Drawings

To assist understanding of the present disclosure and to show how embodiments may be put into effect, reference is made by way of example to the accompanying drawings in which:
Figure 1 shows schematically an example image frame to which visible light information is to be applied;
Figure 2 shows schematically a high-pass filtered version of the image frame of Figure 1;
Figure 3 shows schematically a mask derived from the high-pass filtered image frame of Figure 2;
Figure 4 shows schematically an example of a system and process for encoding the image frame of Figure 1 with visible light communication information; and
Figure 5 shows schematically a second example of a system and process for encoding the image frame of Figure 1 with visible light communication information.

### Detailed Description

As mentioned previously, visible light information can be added to images and video streams which are output on a display screen. Display devices are used in many different types of consumer apparatus including for example television screens or monitors, computer displays or monitors, and displays for other computing devices, including smartphones, tablet computers, laptop computers, etc. Display devices are also used in many public environments in so-called "signage", for example, for displaying advertisements or for information or entertainment that is of interest to a larger audience.

Described herein is a method of encoding visible light communication information in an image frame. The method includes processing the image frame to identify one or more high frequency components of the image frame. The regions of at least one high frequency component of the image are subsequently encoded with information for visible light communication.

The addition of visual light communication information to images and video streams are often not very well concealed and can therefore be obtrusive or disruptive to viewers when the image/video is displayed on a screen. Known methods of embedding visible light communication information in images do not consider which particular areas of the image would be suitable for unobtrusively carrying visible light information. Examples of aspects described herein identify parts of the image that are suitable for carrying such visible information without it being apparent (or at least, without being obviously apparent) in the output to viewers that data has been added to the image or images of a video stream.

In particular, "flat" or plain areas of an image frame are highly susceptible to visual disturbances when modified to include visible information. Examples of such plain areas include sections of sky, snow, skin, etc. Such areas often have relatively little detail and the addition of data to plain areas of an image frame is highly likely to be obtrusive and noticeable to a viewer of the image.

In contrast, highly detailed regions of an image frame, such as for example edges and textures of objects of the image frame, lend themselves better to visible light communication. Highly detailed regions of an image frame often exhibit noticeable changes in luminance and/or hue across the textured/detailed region. Therefore further alterations to the luminance and/or hue of these detailed regions caused by the addition of data will seem less out of place and may even not be noticeable to a viewer (and yet still be discernible to a camera). Highly detailed and textured areas of an image frame therefore lend themselves better to being encoded with visible light communication.

As is known per se, the component pixels or clusters of pixels of a plain region of an image frame in general do not differ greatly in luminosity and hue from neighbouring pixels or clusters of pixels. These plain regions are therefore "low frequency" regions. On the other hand, the component pixels or clusters of pixels of a highly detailed, textured or edge region of an image will exhibit highly contrasting luminosity and/or hue values compared to neighbouring pixels or clusters of pixels. Such highly detailed regions are therefore "high frequency" regions.

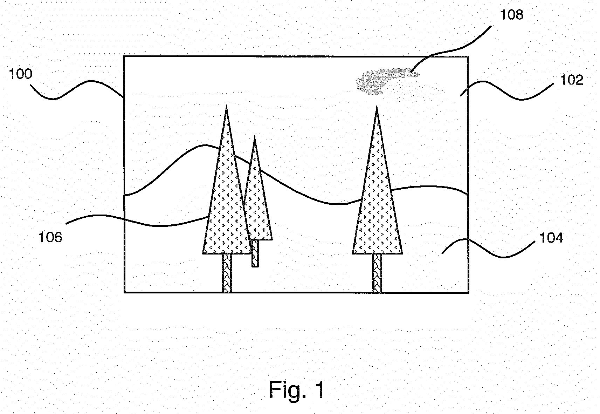

To explain this further, reference is made first to Figure 1, which shows schematically an example image frame 100 to which visible light information is to be applied. In this example, the sky area 102 and land area 104 have little detail. These plain areas 102, 104 of the image frame 100 are low frequency areas, as changes from pixel to pixel occur with a low frequency, making them unsuitable for visible light communication.

In contrast, in this example the outlines or edges and the textured details in the main part of body of the trees 106 and the outline or edge of the dark cloud 108 contrast largely in luminance and/or hue with their neighbouring regions (i.e. here, within and outside the trees 106/cloud 108). In this example, these textured detail areas 106 and edge areas 108, effectively being the border between relatively plain regions, are high frequency areas as changes from pixel to pixel occur with a high frequency, and therefore suitable for visible light communication.

As textured and highly detailed regions of an image frame 100 are better suited for being encoded with visible communication data as described herein, it is desirable to be able to differentiate between high frequency regions 106, 108 and low frequency regions 102, 104. High and low detail regions of an image can be identified and separated by analysing frequencies of the image frame 100.

In one example, a frequency filter is used to identify and separate the high and low frequency components of the image frame 100. When a frequency filter is applied to an image frame 100, regions of the image frame 100 falling within a frequency range, or above/below a frequency threshold, can be identified.

In one example, the frequency filter is a high pass frequency filter, wherein frequency components of the image frame 100 above a pre-defined threshold frequency are identified, to identify regions of the image frame 100 that are to be encoded with visible light information. (Equivalently, in another example, a low pass filter may be used to identify regions of the image frame to be discarded and therefore not be encoded with visible light communication information.)

A frequency filter may be associated with a threshold frequency or threshold frequency range. The threshold frequency/threshold frequency range used when analysing an image frame 100 may vary dependent on, in one example, the resolution of the image frame 100 itself. In an example, a frequency threshold associated with a standard definition video may be around 5MHz - 6MHz. In another example, a frequency threshold associated with a high definition video may be as high as 30MHz-40MHz, depending on the quality of encoding and transmission of the signal.

In one example, textured and edge regions of an image frame 100 may be identified using colour and orientation information of the image frame 100. Alternatively or additionally textured and edge regions of an image frame 100 may be identified using analysis of Voroni regions of the image frame 100. Another example of texture/edge analysis may include histogram analysis, specifically, for example, pairwise geometric histogram.

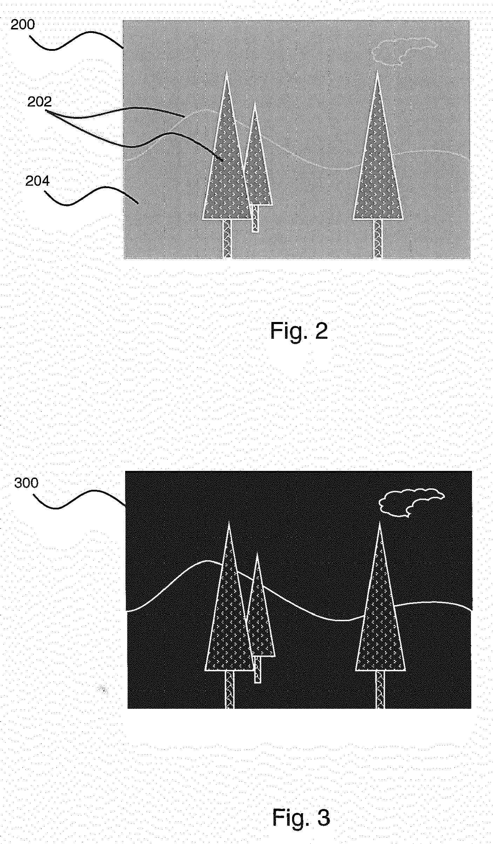

Figures 2 and 3 show schematically the image frame 100 of Figure 1 undergoing frequency analysis for receiving visible light communication information. A high frequency filter has been applied to the image frame 100. The output of the high pass frequency filter is shown in Figure 2 as a filtered frame 200 in which the edges (effectively borders between relatively plain regions and detailed regions) and textures 202 in the image frame 100 are highlighted as these represent the high frequency components of the image. It is at these edge and textured regions of the image frame 100 that visible light communication information will be applied as described herein. The remaining low frequencies regions of the image 100 are attenuated and shown as a uniformly grey area 204.

Figure 3 shows schematically a frame mask 300, created from the filtered frame 200, for identifying the edge and textured regions of the image frame 100 which will be encoded with visible light communication information. The high frequency or edge and textured regions are indicated in white. The remaining non-edge/textured (low frequency) regions of the image frame 100 are shown in black.

Once regions of the image frame 100 to be encoded have been identified, an encoder is arranged to encode the high frequency regions 106, 108 of the image frame 100 with visible light communication information, in this example using the mask 300 (that is, conceptually using the mask 300 during the processing). Visible light communication information may be encoded in a region by modulating the value of a property of each pixel of the region in consecutive video frames. The modulation is typically a modulation in amplitude, in frequency or in phase based on the visible light communication information to be encoded. The visible light communication information may be encoded into the image frame 100 by altering one or more of transparency, luminance and colour hue of the pixel(s) in the region concerned.

The image frame 100 may in one example be part of a video stream. Video streams are a sequence of image frames played in rapid succession. Each image frame 100 of a video stream can therefore be analysed to select areas to which visible light communication data can be applied in an unobtrusive way. One or more image frames may be extracted from a video stream to be encoded with visible light information.

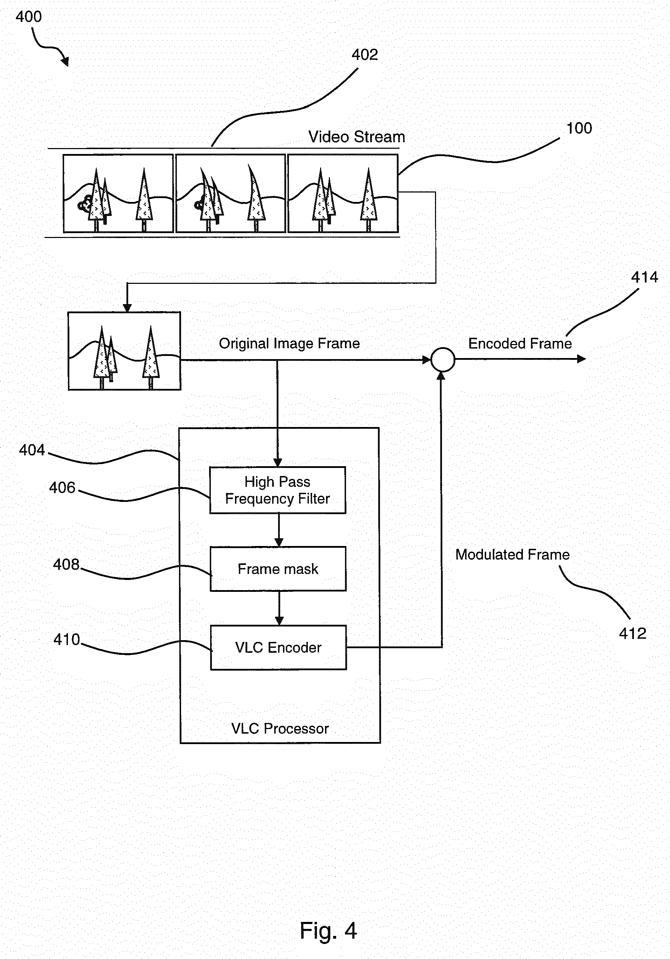

Referring to Figure 4, there is shown an example system 400 for encoding an image frame 100. In this example, the original image frame 100 is extracted from a video stream 402 and sent to a visible light communication processor 404 to be encoded with visible light communication information. At the visible light communication processor 404 a high pass filter 406 is applied to the image frame 100 to identify edge and textured regions of the image frame 100 (i.e. high frequency regions, representing highly detailed areas). Subsequently a frame mask 408 is created from the high pass-filtered image frame to identify the regions of the image frame 100 to be encoded with visible light communication information.

A visible light communication encoder 410 then encodes the identified edge and textured regions of the image frame 100 with visible light communication information via the mask 408, thereby generating a modulated frame 412. The modulated frame 412 and the original image frame 100 are subsequently combined to give an encoded frame 414, which can then be sent to a display screen for display.

The method may be performed at one device or at a plurality of devices. In this example, the visible light communication processor 404 carries out the processes of applying a high pass frequency filter 406 to the image frame 100, generating a frame mask 408, and encoding the frame mask via an encoder 410 to generate a modulated frame 412.

The visible light communication processor 404 may be encompassed in the same device that receives the video stream 402 and/or the image frame 100. Alternatively, the visible light communication processor 404 may be in a different device. Additionally, the encoded frame 414 may be generated at the same device that receives the video stream 402 and/or the image frame 100. Alternatively or additionally, the encoded frame 414 may be generated at the device that contains the visible light communication processor 404.

In one example, the video stream 402 and/or the image frame 100 may be received from a data storage of a device (e.g. a mobile phone or tablet computer or other computing device). The video stream 402 and/or the image frame 100 may, in another example, be from another source, such as a DVD or Blu Ray or the like player, or a terrestrial, satellite or cable broadcast.

The encoded frame 414 may form part of an encoded video stream. The encoded video stream may be displayed at a screen of a device (not shown), and/or stored at a data storage of a device. Examples of such a device include smartphones, laptops, television sets, personal computers, tablet computers, display devices or "walls" such as for so-called signage, etc.

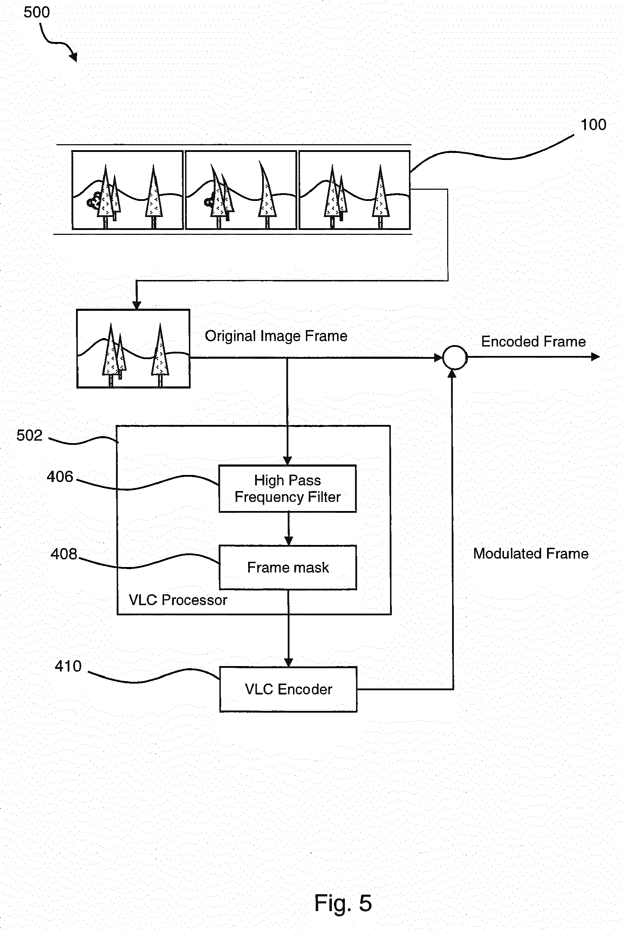

Figure 5 shows schematically another example system 500 for encoding an image frame 100 with visible light communication information. In this example, the stages of applying a high pass frequency filter 406 to an image 100 and the generation of a frame mask 408 are shown occurring in the visible light communication processor 502. The frame mask 408 is passed onto a visible light communication encoder 410 that exists separately of the visible light communication processor 502.

Reference is made herein to data storage for storing data. This may be provided by a single device or by plural devices. Suitable devices include for example a hard disk and non-volatile semiconductor memory.

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM, a ROM, for example a CD ROM or a semiconductor ROM; a magnetic recording medium, for example a floppy disk or hard disk, optical memory devices in general etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A method of encoding visible light communication information in an image frame (100), the method comprising:
processing the image frame (100) to identify one or more high frequency components (106, 108) of the image frame (100); and
encoding the image frame (100) in the region of at least one of the high frequency components (106, 108) with information for visible light communication.

2. A method according to claim 1, wherein identifying one or more high frequency components (106, 108) comprises determining whether frequency components of the image frame (100) are above a frequency threshold.

3. A method according to claim 1 or claim 2, wherein processing the image frame (100) comprises applying a high pass frequency filter to the image frame (100) to identify one or more high frequency components (106, 108) of the image frame (100).

4. A method according to any of claims 1 to 3, comprising:
generating a frame mask (206) identifying one of more regions of high frequency components (106, 108); and
encoding the image frame (100) in the region of at least one of the high frequency components (106, 108) with information for visible light communication via the frame mask (206).

5. A method according to any of claims 1 to 4, wherein the image frame (100) is extracted from a video stream (402) comprising a plurality of image frames (100).

6. A method according to any of claims 1 to 5, wherein the image frame (100) encoded with information for visible light communication forms part of an encoded video stream (402) of plural image frames (100) encoded with information for visible light communication, the encoded video stream (402) being arranged to carry video stream (402) information and visible light communication information.

7. A system for encoding visible light communication information in an image frame (100), the system comprising:
an image processor for processing the image frame (100) to identify one or more high frequency components (106, 108) of the image frame (100); and
an encoder for encoding the image frame (100) in the region of at least one of the high frequency components (106, 108) with information for visible light communication.

8. A system according to claim 7, wherein the image processor is arranged to identify one or more high frequency components (106, 108) of the image frame (100) by determining whether frequency components of the image frame (100) are above a frequency threshold.

9. A system according to claim 7 or claim 8, wherein the image processor is arranged to apply a high pass frequency filter to the image frame (100) to identify one or more high frequency components (106, 108) of the image frame (100).

10. A system according to any of claims 7 to 9, wherein the image processor is arranged to:
generate a frame mask (206) identifying one of more regions of high frequency components (106, 108); and
encode the image frame (100) in the region of at least one of the high frequency components (106, 108) with information for visible light communication via the frame mask (206).

11. A computer program for encoding visible light communication information in an image frame (100), the computer program comprising instructions such that when the computer program is executed on a computing device, the computing device is arranged to:
process the image frame (100) to identify one or more high frequency components (106, 108) of the image frame (100); and
encoding the image frame (100) in the region of at least one of the high frequency components (106, 108) with information for visible light communication.
